# EUROPEAN PATENT SPECIFICATION

(11) **EP 3 119 925 B1**
(45) Date of publication and mention of the grant of the patent: **29.04.2020**
(21) Application number: 15764874.2
(22) Date of filing: 13.03.2015
(51) Int. Cl.: C23F 11/00, C09K 8/54

(54) **DIMERCAPTOTHIADIAZOLES TO PREVENT CORROSION OF MILD STEEL BY ACID GASES IN OIL AND GAS PRODUCTS**
DIMERCAPTOTHIADIAZOLE ZUR VERHINDERUNG DER KORROSION VON WEICHSTAHL DURCH SAURE GASE IN ÖL- UND GASPRODUKTEN
DIMERCAPTOTHIADIAZOLES POUR EMPÊCHER LA CORROSION D'ACIER DOUX PAR DES GAZ ACIDES DANS DES PRODUITS DE PÉTROLE ET DE GAZ

(30) Priority: 18.03.2014 US 201461954932 P; 12.03.2015 US 201514645604
(43) Date of publication of application: 25.01.2017
(73) Proprietor: Baker Hughes, a GE company, LLC, Houston, TX 77073 (US)
(72) Inventor: RAMACHANDRAN, Sunder, Sugar Land, TX 77479 (US); JOVANCICEVIC, Vladimir, Richmond, TX 77469 (US)
(74) Representative: BRP Renaud & Partner mbB Rechtsanwälte Patentanwälte Steuerberater
(86) International application number: PCT/US2015/020351
(87) International publication number: WO 2015/142633

(56) References cited:
- WO-A1-2008/091429
- WO-A1-2010/119235
- WO-A2-2007/111741
- WO-A2-2008/140648
- US-A- 2 836 564
- US-A- 4 350 600
- US-A- 4 450 102
- US-A- 4 684 507
- US-A1- 2004 255 819
- US-A1- 2012 238 479

## Description

### TECHNICAL FIELD

The invention relates to methods and compositions for inhibiting and/or preventing the corrosion of mild steel in environments containing the acid gas carbon dioxide.

### TECHNICAL BACKGROUND

It is well known that iron and steel surfaces will corrode in the presence of brines in equilibrium with acid gases such as carbon dioxide and hydrogen sulfide. While the rate at which corrosion will occur depends on a number of factors, such as the steel alloy itself, the fugacities of acid gases, the temperature of the environment, the length of contact, etc., some sort of corrosion invariably occurs. Attention has turned toward providing corrosion inhibitors in an upstream production stream to prevent corrosion of the steel surfaces that it must come into contact with, and in particular weak acids formed by acid gases.

Specific environments in which an improved corrosion inhibitor would be appreciated include high-temperature, high-shear wells where carbon steel is used as the tubing material. With respect to oil and gas production, it is well known that during the production life of an oil or gas well, the production zone within the well may be chemically treated to prolong the life of both well tubing and carbon steel pipelines.

In earlier years of producing subterranean wells, the vast majority of production and workover conduits comprised carbon steels. These steels were utilized either temporarily or permanently in the well, and treatment and/or stimulation fluids were introduced through them into the well. Due primarily to the drilling and completion of many subterranean wells through formations which contain high concentrations of corrosive fluids such as hydrogen sulfide, carbon dioxide, brine, and combinations of these constituents, the production and workover conduits for use in the wells are sometimes made of high alloy steels, however they are normally made of low alloy carbon steels. The high alloy steels include, but are not necessarily limited to, chrome steels, duplex steels, stainless steels, martensitic alloy steels, ferritic alloy steels, austenitic stainless steels, precipitation-hardened stainless steels, and high nickel content steels. However, corrosion inhibition of mild steel, also known as plain-carbon steel, is still necessary. Mild steel is the most common form of steel because its price is relatively low while it provides material properties that are acceptable for many applications, more so than iron. Low-carbon steel or mild steel is defined herein as that which contains approximately 0.05 - 0.3 wt% carbon, making it malleable and ductile. Mild steel has a relatively low tensile strength, but it is inexpensive and malleable.

The use of monosodium, monopotassium or monoethanolamine salts of 2,5-dimercapto-1,3,4-thiadiazole (DMcT) for the inhibition of the corrosion of brass and steel plated with tin, nickel or chromium is known. U.S. Pat. No. 2,836,564 is directed to condensation products of alpha-halogenated aliphatic mono-carboxylic acids and 2,5-dimercapto-1,3,4-thiadiazole as new compositions of matter, to make the DMcT oil soluble, and to lubricants containing the same, which lubricants possess corrosion and/or rust inhibiting properties. Compositions which form homogeneous blends with lubricating oils are produced by preparing a mixture of an oil-soluble dispersant (preferably a substantially neutral or acidic carboxylic dispersant) and a dimercaptothiadiazole, preferably 2,5-dimercapto-1,3,4-thiadiazole, usually with a diluent, especially a lubricant base liquid, and heating said mixture above about 100°C. according to U.S. Pat. No. 4,136,043. The compositions often contain dimercaptothiadiazole moieties in amounts substantially greater than stoichiometric. They are useful for suppression of copper activity and "lead paint" deposition in lubricants.

U.S. Pat. No. 4,193,882 concerns lubricant compositions containing, in an amount sufficient to inhibit metal corrosion, the reaction product of oleic acid and 2,5-dimercapto-1,3,4-thiadiazole. U.S. Pat. No. 5,137,649 concerns mixed alcohol/dimercaptothiadiazole-derived hydroxy borates having been found to be effective antiwear/antioxidant multifunctional additives for lubricants.

It would be advantageous if new corrosion inhibitors were discovered that would be an improvement over the presently known systems for mild steel, especially for oil and gas streams that contain carbon dioxide and/or hydrogen sulfide.
WO 2010/119235 discloses corrosion inhibitors comprising the reaction product formed from an aldehyde with a thiol and/or an amine functionalized ring structure.
WO 2008/091429 discloses mercaptan-based corrosion inhibitors.

### SUMMARY

There is provided, in one non-limiting embodiment, a method of inhibiting or preventing mild steel corrosion in the presence of a fluid comprising water, a hydrocarbon selected from the group consisting of oil, natural gas, products therefrom, and combinations thereof, and an acid gas selected from the group consisting of carbon dioxide (CO₂). The method involves adding to a fluid in contact with mild steel an effective amount of a corrosion inhibitor composition to inhibit or prevent corrosion of the mild steel. The corrosion inhibitor comprises at least one aqueous-soluble sulfur compound selected from the group consisting of: 2,5-dimercapto-1,3,4-thiadiazole; 2,5-bis(octyldithio)-1,3,4-thiadiazole; 2,5-bis(tert-nonyldithio)-1,3,4-thiadiazole; poly(1,3,4-thiadiazole-2,5-diyldithio) polymer with sulfur chloride; 2,5-dimercapto-1,3,4-thiadiazole disodium salt; 2,5-dimercapto-1,3,4-thiadiazole monosodium salt; 2,5-dimercapto-1,3,4-thiadiazole dipotassium salt; 2,5-dimercapto-1,3,4-thiadiazole monopotassium salt; 2,5-dimercapto-1,3,4-thiadiazole dilithium salt; 2,5-dimercapto-1,3,4-thiadiazole zinc salt; 2,5-dimercapto-1,3,4-thiadiazole monobenzoate ester; poly(1,3,4-thiadiazole-2,5-diyldithiol); 1,3,4-thiadiazolidine-2,5-dithione, polymer with sulfur chloride; and combinations thereof.

Further in another non-restrictive version, there is provided an acidic fluid inhibited against mild steel corrosion, where the acidic composition includes water; a hydrocarbon selected from the group consisting of oil, natural gas, products therefrom, and combinations thereof; an acid gas selected from the group consisting of CO₂; and a corrosion inhibitor composition comprising at least one aqueous-soluble sulfur compound selected from the group consisting of: 2,5-dimercapto-1,3,4-thiadiazole; 2,5-bis(octyldithio)-1,3,4-thiadiazole; 2,5-bis(tert-nonyldithio)-1,3,4-thiadiazole; poly(1,3,4-thiadiazole-2,5-diyldithio) polymer with sulfur chloride; 2,5-dimercapto-1,3,4-thiadiazole disodium salt; 2,5-dimercapto-1,3,4-thiadiazole monosodium salt; 2,5-dimercapto-1,3,4-thiadiazole dipotassium salt; 2,5-dimercapto-1,3,4-thiadiazole monopotassium salt; 2,5-dimercapto-1,3,4-thiadiazole dilithium salt; 2,5-dimercapto-1,3,4-thiadiazole zinc salt; 2,5-dimercapto-1,3,4-thiadiazole monobenzoate ester; poly(1,3,4-thiadiazole-2,5-diyldithiol); 1,3,4-thiadiazolidine-2,5-dithione, polymer with sulfur chloride; and combinations thereof, where the amount of corrosion inhibitor composition in the acidic fluid is effective to inhibit or prevent corrosion of the mild steel when the acidic fluid is in physical contact with mild steel.

### BRIEF DESCRIPTION OF THE DRAWING

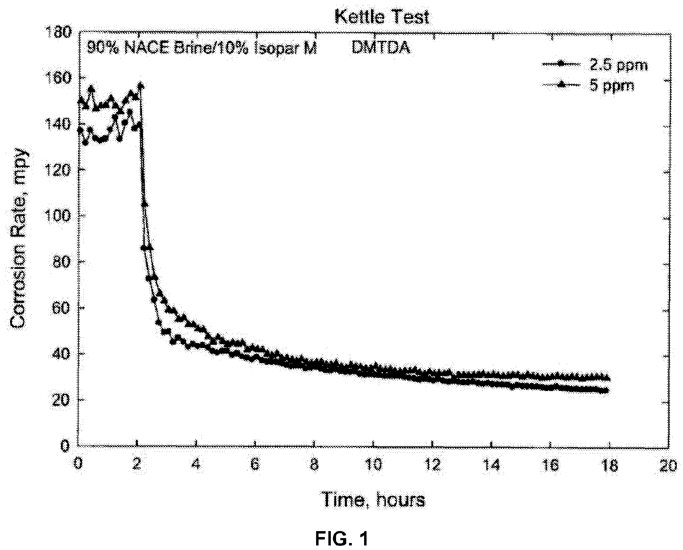

FIG. 1 is a graph of the corrosion rate of mild steel at 150°F (66°C) in kettle tests at atmospheric CO₂ with two different concentrations of 2,5-dimercapto-1,3,4-thiadiazole in a brine fluid.

### DETAILED DESCRIPTION

It has been discovered that aqueous-soluble disulfides, including, but not necessarily limited to, dimercaptothiadiazoles such as 2,5-dimercapto-1,3,4 thiadiazole (DMcT) and its aqueous-soluble salts inhibit and prevent mild steel corrosion by acid gases such carbon dioxide (CO₂) with slight amounts of oxygen in oil and gas production processes.

The methods and compositions herein do not include the oil soluble reaction product of a carboxylic acid with 2,5-dimercapto-1,3,4 thiadiazole disclosed previously in prior art for lubricating oils; see H. Tadashi, K., Ueda, "Anticorrosive effect of dimercaptothiadiazoles", Jpn. Assoc. Corros. Control, Tokyo, Japan 105) Bosei Kanri 1990, 34(12) 538-42 (Japan). These authors examined the anticorrosive effect of sodium, potassium and monoethanol amine salts on ferrous and nonferrous metals. They found anticorrosive effects of the monoethanol amine salts on tin-, nickel- and chromium-plated steels but found no effect on cast iron FC20 and steel SS41. They also noted that dimercaptothiadiazole has poor solubility in water (0.01 wt% in water). In contrast, the methods and compositions herein relate to inhibiting corrosion in fluids that are preferably predominantly water, that is, more than 50 wt% water, alternatively more than 60 wt% water, even more than 70 wt% water, and in other non-limiting embodiments more than 80 wt% water. A large number of oil production systems especially in older fields have liquid streams than often contain more than 90 wt% water. The minimum amount of water is preferably 3 wt%.

In one non-limiting embodiment it has been surprisingly found that a formulation of 10 wt% 2,5-dimercapto-1,3,4 thiadiazole in water was able to inhibit the corrosion of mild steel due to carbon dioxide. This discovery is expected to permit development of new high-temperature, high-shear water soluble corrosion inhibitors.

Possible corrosion inhibitors for use in the present invention include 2,5-dimercapto-1,3,4-thiadiazole; 2,5-bis(octyldithio)-1,3,4-thiadiazole; 2,5-bis(tert-nonyldithio)-1,3,4-thiadiazole; poly(1,3,4-thiadiazole-2,5-diyldithio) polymer with sulfur chloride; and combinations thereof. Alkyl groups attached to the thiadiazole may each independently range from about 1 to about 10 carbon atoms; alternatively from 1 to 8 carbon atoms, and in another non-limiting embodiment from 1 to 4 carbon atoms. All of these alkyl groups may independently be straight, branched and/or cyclic. As defined herein with respect to these alkyl groups, "independent" means that each alkyl group on the same molecule may have different carbon atoms, so long as the carbon atoms in each alkyl group falls within the given range, and that each alkyl group on the same molecule may be differently straight, branched and/or cyclic. Other suitable corrosion inhibitors include 2,5-bis(octyldithio)-1,3,4-thiadiazole; 2,5-dimercapto-1,3,4-thiadiazole disodium salt; 2,5-dimercapto-1,3,4-thiadiazole monosodium salt; 2,5-dimercapto-1,3,4-thiadiazole dipotassium salt; 2,5-dimercapto-1,3,4-thiadiazole monopotassium salt; 2,5-dimercapto-1,3,4-thiadiazole dilithium salt; 2,5-dimercapto-1,3,4-thiadiazole zinc salt; 2,5-dimercapto-1,3,4-thiadiazole monobenzoate ester; poly(1,3,4-thiadiazole-2,5-diyldithiol); 1,3,4-thiadiazolidine-2,5-dithione, polymer with sulfur chloride; and mixtures thereof.

In the case where the corrosion inhibitor is one aqueous-soluble salt of the above 1,3,4 thiadiazole compounds, the one aqueous-soluble salt includes, but is not necessarily limited to, metal salts of the above disulfide compounds, amine salts of the above disulfide compounds, and carboxylic acid salts of the above disulfide compounds, where the metal is selected from the group consisting of alkali metal salts (including, but not necessarily limited to, lithium, sodium, potassium, cesium, and combinations thereof), zinc, and combinations thereof, the amine is selected from the group consisting of primary amines, secondary amines, and tertiary amines, and combinations thereof, and the carboxylic acid is selected from the group consisting of benzoic acid, acetic acid, citric acid, and glycolic acid, and combinations thereof. However, in one non-limiting embodiment, the corrosion inhibitor does not include and has an absence of monoethanolamine salts of the suitable aqueous-soluble sulfur compounds.

The amount of the corrosion inhibitor composition added to a fluid in contact with mild steel, on a weight basis, may range from 0.01 ppm independently to 10,000 ppm (1 wt%); alternatively from about 0.1 ppm independently to about 5,000 ppm; and in another non-limiting embodiment from about 1 ppm independently to about 1,000 ppm. As used herein with respect to ranges, the word "independently" means that any lower threshold may be used together with any upper threshold to give a suitable alternative range.

In one optional embodiment of the corrosion inhibiting composition and method described herein, the pH of the corrosion inhibitor composition may be adjusted or raised to be within about 5 independently to 10; alternatively to from about 6 independently to about 9. The pH may be raised by addition of an effective amount of an alkali metal hydroxide including, but not necessarily limited to, sodium hydroxide and potassium hydroxide, and/or an amine including, but not necessarily limited to, monoethanolamine (MEA), diethylenetriamine (DETA), ethylenediaminetetraacetic acid (EDTA), methyl amine, and combinations of all of these.

Broadly, the fluid treated may be any fluid that involves the exploration, production and processing of oil and gas, and which contains water, a hydrocarbon and CO₂. As defined herein, the fluids treated and products therefrom may contain oil and/or natural gas, and/or products from oil and/or natural gas. Again, in one non-limiting embodiment, the fluid is predominantly water, defined as greater than 50 wt% water. In this sense, "hydrocarbon" does not refer exclusively to compounds that only contain hydrogen and carbon atoms (although these are certainly included), but instead refers to the broader sense in which "hydrocarbon" is used with respect to the exploration, production and processing of oil and gas, in the oil field and in refineries. The hydrocarbons in this sense may include, but are not necessarily limited to, those substituted with nitrogen, oxygen and sulfur, oligomers thereof, and polymers thereof.

The water in the fluid may be relatively pure, but is more likely to be brine, meaning that it has a salt content. The water in the fluid may also include any sea water, fresh water (including but not necessarily limited to river water, lake water, and well/aquifer water), and condensed water. The water may also include any water that could be used for secondary recovery, e.g. reservoir pressure maintenance. The salt in the brine may be any of those commonly found in the oil field, including, but not necessarily limited to, brines containing naturally occurring salts, or salts introduced via the process of exploration and production of hydrocarbons, including, but not necessarily limited to petroleum (also known as crude oil) and natural gas. The salts in the brine may include, but are not necessarily limited to, sodium chloride, potassium chloride, calcium bromide, calcium chloride, sodium bromide, other bromide salts, zinc salts, formate salts, and combinations thereof. In one non-limiting embodiment of the invention, the brine is in equilibrium with the acid gas present.

The compositions and methods described herein are not limited to any particular proportion of acid gas. In one non-limiting embodiment, the method is practiced in systems without oxygen or in the absence of oxygen; more specifically without molecular oxygen or in the absence of molecular oxygen, O₂. Alternatively, the acidic fluid is without molecular oxygen or has an absence of molecular oxygen, O₂. Additionally, the fluids described and treated herein to inhibit and/or prevent mild steel corrosion in the presence of an acid gas are not lubricants and/or have an absence of lubricant.

In an oilfield context, the corrosion inhibitor formulation may be pumped or otherwise introduced into the fluid at a sufficient concentration to coat the mild steel well tubulars and other equipment, for instance to form a thin film.

In one non-restrictive version, an objective of the compositions and methods described herein is to inhibit or prevent corrosion of mild steel contacted by the fluid. It will also be appreciated that it is not necessary that corrosion be entirely prevented for the methods described herein to be considered successful, although corrosion prevention is certainly an acceptable goal. The methods may be considered successful if corrosion of mild steel contacting the fluid is inhibited or decreased as compared with an identical fluid which does not have a corrosion inhibitor, as described herein.

Organic sulfur containing molecules such as dimercaptothiadiazoles, including 2,5-dimercapto-1,3,4-thiadiazole, and its aqueous-soluble salts are potential high-shear water soluble high-temperature corrosion inhibitors. By "high-temperature" is meant a temperature between about 100°C independently to about 300°C; alternatively from about 125°C independently to about 275°C, and in a different non-limiting embodiment from about 150°C independently to about 250°C; and in a different non-restrictive embodiment from about 175°C independently to about 225°C. They potentially could be blended with scale inhibitors and may work better than 2-mercaptoethanol and/or 2-mercaptoethanol sulfide.

Optional additional corrosion inhibitors which may be used with the thiadiazoles include, but are not necessarily limited to Mannich reaction products, imidazolines, amidoamines, phosphate esters, quaternary amine compounds, and combinations thereof. In one non-limiting embodiment, useful corrosion inhibitor bases are the Mannich reaction products, which may include, but are not necessarily limited to, the materials of U.S. Pat. Nos. 3,077,454; 5,366,643; and 5,591,381. The products of U.S. Pat. No. 3,077,454 can be made with approximately a 50% yield, and they require the presence of a fatty acid, such as a tall oil fatty acid, in one non-limiting embodiment. More specifically, the Mannich reaction product may be the product of reaction of:
(i) one mole of an ammonia derivative having at least one hydrogen attached to nitrogen and having no groups reactive under the conditions of reaction other than hydrogen,
(ii) from 1.5 to 10 moles of a carbonyl compound having at least one hydrogen atom on the carbon atom adjacent to the carbonyl group,
(iii) from 2 to 10 moles of an aldehyde different from the carbonyl compound selected from the group consisting of aliphatic aldehydes having from 1 to 16 carbon atoms and aromatic aldehydes of the benzene series and having no functional groups other than aldehyde groups, and
(iv)from 0.6 to 24 parts by weight based on (1), (2), and (3) of an organic acid having from 1 to 20 carbon atoms,
at a temperature from about 150°F (66°C) to about 250°F (121°C) for from about 1 to 16 hours.

One suitable non-limiting Mannich reaction based acid corrosion inhibitor is comprised of the condensation reaction product of 1,3-dibutyl thiourea and acetophenone. Baker Hughes CI 200 is a corrosion inhibitor of this type. They contain acetylenic alcohols as well as oxyalkylated alcohol surfactant dispersants, in a co-solvent system containing methanol and fatty acid derivatives.

Baker Hughes CI 300 is a suitable quinoline quaternary amine-based acid corrosion inhibitor containing cinnamic aldehyde, as well as oxyalkylated linear alcohol dispersants in a mixed solvent system containing primary alcohols and aromatic naphtha.

Suitable quaternary amine compounds may include, but are not necessarily limited to, the nitrogen-substituted heterocycles of 6 to 10 members quaternized with alkyl halides, also commonly referred to as coal tar based quats. These materials are typically quinolines, and pyridines quaternized with alkyl and/or aryl halides, where the alkyl or aryl group may range from methyl to benzyl (C₁ to C₆). Naphthyl quinoline quats are included in this group. Further information may be found with reference to U.S. Pat. No. 2,814,593 which discusses benzyl chloride quats of quinoline.

Other optional ingredients may be used with the corrosion inhibitor herein, and may include, but are not necessarily limited to, nitrogen compounds, such as a quarternary ammonium compounds, amines amidoamines, phosphate esters solvents such as alcohols or ketones; and aromatic hydrocarbons or mixtures thereof, as are known to those skilled in the art. For example, acid corrosion inhibitors as made and described in U.S. Pat. Nos. 3,514,410; 3,404,094; 3,107,221; 2,993,863; and 3,382,179 may be utilized herein. In one non-restrictive embodiment, the corrosion inhibitor contains at least one acetylenic alcohol having from 3 to 10 carbon atoms. In another non-limiting embodiment herein however, the corrosion inhibitor excludes and/or has an absence of acetylenic alcohol.

The nitrogen or ammonia compounds that can be optionally employed herein, may include, but are not limited to, those amines having from 1 to 24 carbon atoms in each alkyl moiety as well as the six-membered heterocyclic amines, for example, alkyl pyridines, crude quinolines and mixtures thereof. This includes such amines as ethylamine, diethylamine, triethylamine, propylamine, dipropylamine, tripropylamine, mono-, di- and tripentylamine, mono-, di- and trihexylamine and isomers of these such as isopropylamine, tertiary-butylamine, etc. This also includes alkyl pyridines having from one to five nuclear alkyl substituents per pyridine moiety, such alkyl substituents having from one to 12 carbon atoms, and preferably those having an average of six carbon atoms per pyridine moiety, such as a mixture of high boiling tertiary-nitrogen-heterocyclic compounds, such as HAP (high alkyl pyridines), Reilly 10-20 base and alkyl pyridines H3. Other nitrogen compounds include the crude quinolines having a variety of substituents.

The corrosion inhibitor may also contain a number of other constituents, such as fatty alcohol adducts, nonyl phenol adducts and tallow amine adducts, tall oil adducts, such as surfactants. Oil wetting components, such as heavy aromatic solvents, may also be present. In another non-limiting embodiment, the corrosion inhibitor contains at least one saturated alcohol having from 1 to 5 carbon atoms, and at least one alkyl phenol or alkoxylated alkyl phenol having from 15 to 24 carbon atoms.

The corrosion inhibitor composition also contemplates incorporation of these other corrosion inhibitors, which typically will be provided in treatment concentrations of from about 0.1 ppm, based upon the weight of the entire treatment fluid independently to about 1,000 ppm of such weight. Most often, the total amount of corrosion inhibitors will range from about 10 independently to 200 ppm.

It will be appreciated that the compositions and methods herein will have applicability to other industries besides petroleum recovery, including, but not necessarily limited to, well tubing, well casing, pipelines and other conduits, and other applications where it is desirable to decrease corrosion, such as chemical processes that necessarily require the contact of acid gases etc. While the specific implementation of the methods and compositions herein is described in the context of the oil patch, they may certainly find uses in conduits, fittings, and other equipment in hard to reach locations, such as industrial cleaning applications. It will be appreciated that one of ordinary skill in the art of corrosion inhibition will be able to adapt the teachings herein to applications outside the realm of oil and gas recovery, such as the area of chemical processing, with only routine experimentation.

In the implementation of the methods and corrosion inhibitors herein in the production of fluids from subterranean reservoirs, a fluid may be introduced through a mild steel member or conduit positioned within a well or other equipment. The corrosion inhibitor herein is introduced, added, or injected into the fluid. As noted, the fluid contains carbon dioxide. Also included herein are methods of treating a well for enhancement of production within a production zone by introduction or addition into a fluid containing carbon dioxide of the corrosion inhibitor composition herein.

The invention will be described further in the following illustrative Example, which is non-limiting and serves only to further illuminate the invention.

### EXAMPLE 1

A formulation of 10% 2,5-dimercapto-1,3,4 thiadiazole (DMTDA) in water with KOH added to adjust the pH to 8.1 was made. The corrosion inhibition of this formulation was tested in a kettle test at 150°F (66°C), atmospheric CO₂ in a 90% NACE (National Association of Corrosion Engineers) brine and 10% ISOPAR™-M mixture. The results are shown in FIG. 1.

The blank corrosion rates range from 140 to 190 mpy (mils per year) (3.6 to 4.8 mm per year). Immediately with the injection of the corrosion inhibitor, the corrosion rate lowered to below 40 mpy (1.0 mm per year) in the test with the addition of 2.5 or 5 ppm of 2,5-dimercapto-1,3,4-thiadiazole.

Many modifications may be made in the present invention without departing from the scope thereof that are defined only by the appended claims. For example, certain components *per se,* or combinations of components thereof other than those specifically set out herein may be found by one of routine skill in the art to be particularly advantageous, different aqueous-soluble disulfide compounds, with certain optional solvents and/or other corrosion inhibitors, surfactants, etc. other than those mentioned or exemplified are expected to be useful.

The words "comprising" and "comprises" as used throughout the claims is interpreted "including but not limited to".

The present invention may suitably comprise, consist or consist essentially of the elements disclosed and may be practiced in the absence of an element not disclosed. For instance, in one non-limiting embodiment, there is provided a method of inhibiting or preventing mild steel corrosion in the presence of an acid gas selected from the group consisting of carbon dioxide (CO₂), where the method consists essentially of or consists of adding to a fluid in contact with mild steel an effective amount of a corrosion inhibitor composition to inhibit or prevent corrosion of the mild steel, wherein the corrosion inhibitor comprises at least one aqueous-soluble sulfur compound selected from the group consisting of: 2,5-dimercapto-1,3,4-thiadiazole; 2,5-bis(octyldithio)-1,3,4-thiadiazole; 2,5-bis(tert-nonyldithio)-1,3,4-thiadiazole; poly(1,3,4-thiadiazole-2,5-diyldithio) polymer with sulfur chloride; 2,5-dimercapto-1,3,4-thiadiazole disodium salt; 2,5-dimercapto-1,3,4-thiadiazole monosodium salt; 2,5-dimercapto-1,3,4-thiadiazole dipotassium salt; 2,5-dimercapto-1,3,4-thiadiazole monopotassium salt; 2,5-dimercapto-1,3,4-thiadiazole dilithium salt; 2,5-dimercapto-1,3,4-thiadiazole zinc salt; 2,5-dimercapto-1,3,4-thiadiazole monobenzoate ester; poly(1,3,4-thiadiazole-2,5-diyldithiol); 1,3,4-thiadiazolidine-2,5-dithione, polymer with sulfur chloride; and combinations thereof. The fluid may consist essentially of or consist of water, a hydrocarbon selected from the group consisting of oil, natural gas, products therefrom, and combinations thereof, and an acid gas selected from the group consisting of CO₂.

Alternatively, there may be provided an acidic fluid inhibited against mild steel corrosion, where the acidic composition consists essentially of or consists of brine; a hydrocarbon selected from the group consisting of oil, natural gas, products therefrom, and combinations thereof; an acid gas selected from the group consisting of CO₂ in equilibrium with the brine; and a corrosion inhibitor composition comprising, consisting essentially of, or consisting of at least one aqueous-soluble sulfur compound selected from the group consisting of 2,5-dimercapto-1,3,4-thiadiazole; 2,5-bis(octyldithio)-1,3,4-thiadiazole; 2,5-bis(tert-nonyldithio)-1,3,4-thiadiazole; poly(1,3,4-thiadiazole-2,5-diyldithio) polymer with sulfur chloride; 2,5-dimercapto-1,3,4-thiadiazole disodium salt; 2,5-dimercapto-1,3,4-thiadiazole monosodium salt; 2,5-dimercapto-1,3,4-thiadiazole dipotassium salt; 2,5-dimercapto-1,3,4-thiadiazole monopotassium salt; 2,5-dimercapto-1,3,4-thiadiazole dilithium salt; 2,5-dimercapto-1,3,4-thiadiazole zinc salt; 2,5-dimercapto-1,3,4-thiadiazole monobenzoate ester; poly(1,3,4-thiadiazole-2,5-diyldithiol); 1,3,4-thiadiazolidine-2,5-dithione, polymer with sulfur chloride; and combinations thereof, where the amount of corrosion inhibitor composition in brines in equilibrium with carbon dioxide is effective to inhibit or prevent corrosion of the mild steel when the brine in equilibrium with carbon dioxide is in physical contact with mild steel.

## Claims

1. A method of inhibiting or preventing mild steel corrosion in the presence of a fluid comprising water, a hydrocarbon selected from the group consisting of oil, natural gas, products therefrom, and combinations thereof, and an acid gas selected from the group consisting of carbon dioxide (CO₂), the method comprising:
adding to the fluid in contact with mild steel an effective amount of a corrosion inhibitor composition to inhibit or prevent corrosion of the mild steel, where the corrosion inhibitor composition comprises at least one aqueous-soluble sulfur compound selected from the group consisting of:
2,5-dimercapto-1,3,4-thiadiazole; 2,5-bis(octyldithio)-1,3,4-thiadiazole; 2,5-bis(tert-nonyldithio)-1,3,4-thiadiazole; poly(1,3,4-thiadiazole-2,5-diyldithio) polymer with sulfur chloride; 2,5-dimercapto-1,3,4-thiadiazole disodium salt; 2,5-dimercapto-1,3,4-thiadiazole monosodium salt; 2,5-dimercapto-1,3,4-thiadiazole dipotassium salt; 2,5-dimercapto-1,3,4-thiadiazole monopotassium salt; 2,5-dimercapto-1,3,4-thiadiazole dilithium salt; 2,5-dimercapto-1,3,4-thiadiazole zinc salt; 2,5-dimercapto-1,3,4-thiadiazole monobenzoate ester; poly(1,3,4-thiadiazole-2,5-diyldithiol); 1,3,4-thiadiazolidine-2,5-dithione, polymer with sulfur chloride; and combinations thereof.

2. The method of claim 1 where the effective amount of the corrosion inhibitor composition ranges from 0.01 ppm to 10,000 ppm.

3. The method of claim 1 or 2 further comprising adjusting the pH of the corrosion inhibitor composition to be within 5 to 10, preferably where the pH of the corrosion inhibitor composition is adjusted using a pH adjuster selected from the group consisting of:
alkali metal hydroxides selected from the group consisting of sodium hydroxide and potassium hydroxide;
amines selected from the group consisting of monoethanolamine (MEA), diethylenetriamine (DETA), ethylenediaminetetraacetic acid (EDTA), methyl amine; and
combinations of the above.

4. The method of claim 1 or 2 where the corrosion inhibitor composition comprises at least 10 wt% 2,5-dimercapto-1,3,4-thiadiazole and/or salts thereof in water.

5. The method of claim 1 or 2 where the method is practiced in the absence of molecular oxygen.

6. An acidic fluid inhibited against mild steel corrosion, the acidic fluid comprising:
water;
a hydrocarbon selected from the group consisting of oil, natural gas, products therefrom, and combinations thereof;
an acid gas selected from the group consisting of CO₂; and
a corrosion inhibitor composition comprising at least one aqueous-soluble sulfur compound selected from the group consisting of 2,5-dimercapto-1,3,4-thiadiazole; 2,5-bis(octyldithio)-1,3,4-thiadiazole; 2,5-bis(tert-nonyldithio)-1,3,4-thiadiazole; poly(1,3,4-thiadiazole-2,5-diyldithio) polymer with sulfur chloride; 2,5-dimercapto-1,3,4-thiadiazole disodium salt; 2,5-dimercapto-1,3,4-thiadiazole monosodium salt; 2,5-dimercapto-1,3,4-thiadiazole dipotassium salt; 2,5-dimercapto-1,3,4-thiadiazole monopotassium salt; 2,5-dimercapto-1,3,4-thiadiazole dilithium salt; 2,5-dimercapto-1,3,4-thiadiazole zinc salt; 2,5-dimercapto-1,3,4-thiadiazole monobenzoate ester; poly(1,3,4-thiadiazole-2,5-diyldithiol); 1,3,4-thiadiazolidine-2,5-dithione, polymer with sulfur chloride; and combinations thereof;
where the amount of corrosion inhibitor composition in the acidic fluid is effective to inhibit or prevent corrosion of the mild steel when the acidic fluid is in physical contact with mild steel.

7. The acidic fluid of claim 6 where the amount of the corrosion inhibitor composition in the acidic fluid ranges from 0.1 ppm to 1,000 ppm.

8. The acidic fluid of claim 6 or 7 where the pH of the corrosion inhibitor composition is adjusted to be within 5 to 10 using a pH adjuster selected from the group consisting of:
alkali metal hydroxides selected from the group consisting of sodium hydroxide and potassium hydroxide;
amines selected from the group consisting of monoethanolamine (MEA), diethylenetriamine (DETA), ethylenediaminetetraacetic acid (EDTA), methylamine; and
combinations of the above.

9. The acidic fluid of claim 6 or 7 where the acidic fluid has an absence of molecular oxygen.

10. The method of claim 1 or 2 or the acidic fluid of claim 6 or 7 where the fluid comprises more than 50 wt% water.

11. The acidic fluid of claim 6 or 7 where the corrosion inhibitor composition comprises at least 10 wt% 2,5-dimercapto-1,3,4-thiadiazole and/or salts thereof in water.

## Patentansprüche

1. Verfahren zum Inhibieren oder Verhindern von Weichstahlkorrosion in Gegenwart eines Fluids, umfassend Wasser, einen Kohlenwasserstoff, ausgewählt aus der Gruppe, bestehend aus Öl, Erdgas, Produkten daraus und Kombinationen davon, und ein Sauergas, ausgewählt aus der Gruppe, bestehend aus Kohlendioxid (CO₂), wobei das Verfahren umfasst:
Hinzufügen einer wirksamen Menge einer Korrosionsinhibitorzusammensetzung zu dem Fluid, das mit Weichstahl in Kontakt steht, um Korrosion des Weichstahls zu inhibieren oder zu verhindern, wobei die Korrosionsinhibitorzusammensetzung mindestens eine wasserlösliche Schwefelverbindung umfasst, ausgewählt aus der Gruppe, bestehend aus:
2,5-Dimercapto-1,3,4-thiadiazol-2,5-Bis(octyldithio)-1,3,4-thiadiazol;
2,5-Bis(tert-nonyldithio)-1,3,4-thiadiazol;
Poly(1,3,4-thiadiazol-2,5-diyldithio)-Polymer mit Schwefelchlorid; 2,5-Dimercapto-1,3,4-thiadiazol-Dinatriumsalz; 2,5-Dimercapto-1,3,4-thiadiazol-Mononatriumsalz; 2,5-Dimercapto-1,3,4-thiadiazol-Dikaliumsalz; 2,5-Dimercapto-1,3,4-thiadiazol-Monokaliumsalz; 2,5-Dimercapto-1,3,4-thiadiazol-Dilithiumsalz; 2,5-Dimercapto-1,3,4-thiadiazol-Zinksalz; 2,5-Dimercapto-1,3,4-thiadiazol-Monobenzoatester; Poly(1,3,4-thiadiazol-2,5-diyldithiol); 1,3,4-Thiadiazolidin-2,5-dithion, Polymer mit Schwefelchlorid; und Kombinationen davon.

2. Verfahren nach Anspruch 1, wobei die wirksame Menge der Korrosionsinhibitorzusammensetzung im Bereich von 0,01 ppm bis 10.000 ppm liegt.

3. Verfahren nach Anspruch 1 oder 2, ferner umfassend das Einstellen des pH-Werts der Korrosionsinhibitorzusammensetzung, um innerhalb von 5 bis 10 zu liegen, wobei der pH-Wert der Korrosionsinhibitorzusammensetzung unter Verwendung eines pH-Wert-Einstellmittels eingestellt wird, ausgewählt aus der Gruppe, bestehend aus:
Alkalimetallhydroxiden, ausgewählt aus der Gruppe, bestehend aus Natriumhydroxid und Kaliumhydroxid;
Aminen, ausgewählt aus der Gruppe, bestehend aus Monoethanolamin (MEA), Diethylentriamin (DETA), Ethylendiamintetraessigsäure (EDTA), Methylamin; und
Kombinationen der Obigen.

4. Verfahren nach Anspruch 1 oder 2, wobei die Korrosionsinhibitorzusammensetzung mindestens 10 Gew.-% 2,5-Dimercapto-1,3,4-thiadiazol und/oder Salze davon in Wasser umfasst.

5. Verfahren nach Anspruch 1 oder 2, wobei das Verfahren in Abwesenheit von molekularem Sauerstoff ausgeführt wird.

6. Saures Fluid, das gegen Weichstahlkorrosion inhibiert ist, wobei das saure Fluid umfasst: Wasser;
einen Kohlenwasserstoff, ausgewählt aus der Gruppe, bestehend aus Öl, Erdgas, Produkten daraus und Kombinationen davon;
ein Sauergas, ausgewählt aus der Gruppe, bestehend aus CO₂; und
eine Korrosionsinhibitorzusammensetzung, umfassend mindestens eine wasserlösliche Schwefelverbindung, ausgewählt aus der Gruppe, bestehend aus
2,5-Dimercapto-1,3,4-thiadiazol; 2,5-Bis(octyldithio)-1,3,4-thiadiazol; 2,5-Bis(tert-nonyldithio)-1,3,4-thiadiazol;
Poly(1,3,4-thiadiazol-2,5-diyldithio)-Polymer mit Schwefelchlorid;
2,5-Dimercapto-1,3,4-thiadiazol-Dinatriumsalz; 2,5-Dimercapto-1,3,4-thiadiazol-Mononatriumsalz;
2,5-Dimercapto-1,3,4-thiadiazol-Dikaliumsalz; 2,5-Dimercapto-1,3,4-thiadiazol-Monokaliumsalz;
2,5-Dimercapto-1,3,4-thiadiazol-Dilithiumsalz; 2,5-Dimercapto-1,3,4-thiadiazol-Zinksalz; 2,5-Dimercapto-1,3,4-thiadiazol-Monobenzoatester; Poly(1,3,4-thiadiazol-2,5-diyldithiol); 1,3,4-Thiadiazolidin-2,5-dithion, Polymer mit Schwefelchlorid; und Kombinationen davon;
wobei die Menge der Korrosionsinhibitorzusammensetzung in dem sauren Fluid wirksam ist, um die Korrosion des Weichstahls zu inhibieren oder zu verhindern, wenn das saure Fluid in physischem Kontakt mit Weichstahl steht.

7. Saures Fluid nach Anspruch 6, wobei die Menge der Korrosionsinhibitorzusammensetzung in dem sauren Fluid im Bereich von 0,1 ppm bis 1.000 ppm liegt.

8. Saures Fluid nach Anspruch 6 oder 7, wobei der pH-Wert der Korrosionsinhibitorzusammensetzung eingestellt wird, um innerhalb von 5 bis 10 zu liegen, unter Verwendung eines pH-Einstellmittels, ausgewählt aus der Gruppe, bestehend aus:
Alkalimetallhydroxiden, ausgewählt aus der Gruppe, bestehend aus Natriumhydroxid und Kaliumhydroxid;
Aminen, ausgewählt aus der Gruppe, bestehend aus Monoethanolamin (MEA), Diethylentriamin (DETA), Ethylendiamintetraessigsäure (EDTA), Methylamin; und
Kombinationen der Obigen.

9. Saures Fluid nach Anspruch 6 oder 7, wobei das saure Fluid eine Abwesenheit von molekularem Sauerstoff aufweist.

10. Verfahren nach Anspruch 1 oder 2 oder das saure Fluid nach Anspruch 6 oder 7, wobei das Fluid mehr als 50 Gew.-% Wasser umfasst.

11. Saures Fluid nach Anspruch 6 oder 7, wobei die Korrosionsinhibitorzusammensetzung mindestens 10 Gew.-% 2,5-Dimercapto-1,3,4-thiadiazol und/oder Salze davon in Wasser umfasst.

## Revendications

1. Procédé d'inhibition ou de prévention de corrosion d'acier doux en présence d'un fluide comprenant de l'eau, un hydrocarbure choisi dans le groupe constitué de pétrole, gaz naturel, produits de ceux-ci, et combinaisons de ceux-ci, et un gaz acide choisi dans le groupe constitué de dioxyde de carbone (CO₂), le procédé comprenant :
l'ajout au fluide en contact avec l'acier doux d'une quantité efficace d'une composition d'inhibiteur de corrosion pour inhiber ou prévenir une corrosion de l'acier doux, où la composition d'inhibiteur de corrosion comprend au moins un composé soufré soluble dans l'eau choisi dans le groupe constitué de :
2,5-dimercapto-1,3,4-thiadiazole ; 2,5-bis(octyldithio)-1,3,4-thiadiazole ;
2,5-bis(tert-nonyldithio)-1,3,4-thiadiazole ;
polymère de poly(1,3,4-thiadiazole-2,5-diyldithio) avec du chlorure de soufre ; sel disodique de 2,5-dimercapto-1,3,4-thiadiazole ; sel monosodique de 2,5-dimercapto-1,3,4-thiadiazole ; sel dipotassique de 2,5-dimercapto-1,3,4-thiadiazole ; sel monopotassique de 2,5-dimercapto-1,3,4-thiadiazole ; sel dilithié de 2,5-dimercapto-1,3,4-thiadiazole ; 2,5-dimercapto-1,3,4-thiadiazole sel de zinc ; ester monobenzoate de 2,5-dimercapto-1,3,4-thiadiazole ; poly(1,3,4-thiadiazole-2,5-diyldithiol) ; 1,3,4-thiadiazolidine-2,5-dithione, polymère avec du chlorure de soufre ; et de combinaisons de ceux-ci.

2. Procédé selon la revendication 1 où la quantité efficace de la composition d'inhibiteur de corrosion va de 0,01 ppm à 10 000 ppm.

3. Procédé selon la revendication 1 ou 2 comprenant en outre un ajustement du pH de la composition d'inhibiteur de corrosion pour qu'il se situe de 5 à 10, de préférence où le pH de la composition d'inhibiteur de corrosion est ajusté en utilisant un ajusteur de pH choisi dans le groupe constitué de :
hydroxydes de métal alcalin choisis dans le groupe constitué d'hydroxyde de sodium et d'hydroxyde de potassium ;
amines choisies dans le groupe constitué de monoéthanolamine (MEA), de diéthylènetriamine (DETA), d'acide éthylènediamine-tétracétique (EDTA), de méthylamine ; et
de combinaisons des substances ci-dessus.

4. Procédé selon la revendication 1 ou 2 où la composition d'inhibiteur de corrosion comprend au moins 10 % en poids de 2,5-dimercapto-1,3,4-thiadiazole et/ou de sels de celui-ci dans de l'eau.

5. Procédé selon la revendication 1 ou 2 où le procédé est mis en pratique en l'absence d'oxygène moléculaire.

6. Fluide acide inhibé vis-à-vis d'une corrosion d'acier doux, le fluide acide comprenant : de l'eau ;
un hydrocarbure choisi dans le groupe constitué de pétrole, gaz naturel, produits de ceux-ci, et combinaisons de ceux-ci ;
un gaz acide choisi dans le groupe constitué de CO₂ ; et
une composition d'inhibiteur de corrosion comprenant au moins un composé soufré soluble dans l'eau choisi dans le groupe constitué de
2,5-dimercapto-1,3,4-thiadiazole ; 2,5-bis(octyldithio)-1,3,4-thiadiazole ;
2,5-bis(tert-nonyldithio)-1,3,4-thiadiazole ;
polymère de poly(1,3,4-thiadiazole-2,5-diyldithio) avec du chlorure de soufre ; sel disodique de 2,5-dimercapto-1,3,4-thiadiazole ; sel monosodique de 2,5-dimercapto-1,3,4-thiadiazole ;
sel dipotassique de 2,5-dimercapto-1,3,4-thiadiazole ; sel monopotassique de 2,5-dimercapto-1,3,4-thiadiazole ;
sel dilithié de 2,5-dimercapto-1,3,4-thiadiazole ; 2,5-dimercapto-1,3,4-thiadiazole sel de zinc ; ester monobenzoate de 2,5-dimercapto-1,3,4-thiadiazole ; poly(1,3,4-thiadiazole-2,5-diyldithiol) ; 1,3,4-thiadiazolidine-2,5-dithione, polymère avec du chlorure de soufre ; et des combinaisons de ceux-ci ;
où la quantité de composition d'inhibiteur de corrosion dans le fluide acide est efficace pour inhiber ou prévenir une corrosion de l'acier doux lorsque le fluide acide est en contact physique avec l'acier doux.

7. Fluide acide selon la revendication 6 où la quantité de la composition d'inhibiteur de corrosion dans le fluide acide va de 0,1 ppm à 1000 ppm.

8. Fluide acide selon la revendication 6 ou 7 où le pH de la composition d'inhibiteur de corrosion est ajusté pour qu'il se situe de 5 à 10 en utilisant un ajusteur de pH choisi dans le groupe constitué de :
hydroxydes de métal alcalin choisis dans le groupe constitué d'hydroxyde de sodium et d'hydroxyde de potassium ;
amines choisies dans le groupe constitué de monoéthanolamine (MEA), de diéthylènetriamine (DETA), d'acide éthylènediamine-tétracétique (EDTA), de méthylamine ; et
de combinaisons des substances ci-dessus.

9. Fluide acide selon la revendication 6 ou 7 où le fluide acide a une absence d'oxygène moléculaire.

10. Procédé selon la revendication 1 ou 2 ou fluide acide selon la revendication 6 ou 7 où le fluide comprend plus de 50 % en poids d'eau.

11. Fluide acide selon la revendication 6 ou 7 où la composition d'inhibiteur de corrosion comprend au moins 10 % en poids de 2,5-dimercapto-1,3,4-thiadiazole et/ou de sels de celui-ci dans de l'eau.
